# EUROPÄISCHE PATENTSCHRIFT

(11) **EP 2 524 885 B1**
(45) Veröffentlichungstag und Bekanntmachung des Hinweises auf die Patenterteilung: **26.11.2014**
(21) Anmeldenummer: 12168602.6
(22) Anmeldetag: 21.05.2012
(51) Int. Cl.: B65G 57/18, B65G 61/00

(54) **Stapelvorrichtung und Verfahren zur zumindest weitgehend selbsttätigen Stapelung von Schnitthölzern**
Stacking device and method for primarily self-actuated stacking of trimmed timber
Dispositif d'empilement et procédé pour l'empilement principalement automatique de bois de sciage

(30) Priorität: 20.05.2011 DE 102011050546
(43) Veröffentlichungstag der Anmeldung: 21.11.2012
(73) Patentinhaber: Simon Möhringer Anlagenbau GmbH, 97353 Wiesentheid (DE)
(72) Erfinder: Möhringer, Stefan, 97353 Wiesentheid (DE)
(74) Vertreter: Geitz Truckenmüller Lucht

(56) Entgegenhaltungen:
- WO-A1-2011/009150
- DE-A1- 3 210 490
- DE-A1- 4 035 171
- DE-A1- 4 329 289
- US-A- 5 501 571

## Beschreibung

Die Erfindung betrifft eine Stapelvorrichtung und ein Verfahren zur weitgehend selbsttätigen Stapelung von Schnitthölzern.

Eine solche Stapelvorrichtung ist beispielsweise aus der österreichischen Patentschrift AT 381 291 B bekannt. Aus dieser Schrift ist ein Verfahren zum Stapeln von Brettern oder dergleichen in paralleler Nebeneinander-Anordnung vorbekannt, bei dem die Bretter zu Bretterschichten geringerer Breite als die des zu erzeugenden Stapels zusammengefasst und mittels einer rechnergesteuerten Horizontalbewegung über den Stapel gebracht werden, so dass die Außenränder der beiden äußersten Bretter der jeweiligen Bretterschicht eine der Breite des Stapels entsprechenden Abstand besitzen und die Bretter jeweils zu einer Bretterschicht zusammengefasst werden, indem sie einzeln über den Stapel bewegt und dann im Abstand voneinander abgesetzt werden.

Im Weiteren ist aus dieser Patentschrift eine Vorrichtung zum Stapeln der Bretter bekannt, die eine Fördereinrichtung umfasst, welche die Bretter einer Tragvorrichtung zuführt, die dann die Bretter über den Stapel bringt. Die Tragvorrichtung besitzt mehrere parallel zueinander verlaufende paarweise angeordnete horizontale Schienen, an denen sich Saugnäpfe befinden, die mittels Unterdrucks die einzelnen Bretter anheben und dann die Bretter zur Erzeugung der einzelnen Bretterschichten ablegen, die so zu einem Stapel derart zusammengesetzt werden, dass die Bretter innerhalb der einzelnen Bretterschichten des Stapels jeweils im Abstand zueinander gesetzt sind.

Die mittels der Fördereinrichtung angelieferten Bretter werden an einen Stauförderer übergeben und ebendort zu einer Bretterschicht zusammengeschoben, bevor sie mittels der beschriebenen Trageinrichtung abgehoben und über den Stapel bewegt werden und dort gemäß einer berechneten Anordnung einer Bretterschicht abgesetzt werden.

Die vorbekannte Stapelvorrichtung und das vorbekannte Stapelverfahren beziehen sich jeweils ausschließlich auf besäumte, also bereits vorbehandelte und zugeschnittene Bretter, die dann in paralleler Nebeneinander-Anordnung in einem Stapel jeweils voneinander beabstandet gemäß einer berechneten Stapelanordnung mit einer entsprechenden. Hub- und Tragvorrichtung angeordnet werden.

Aus der Schweizer Patentschrift CH 678 518 A5 ist eine Sortiereinrichtung, insbesondere für Holzbretter bekannt. Die Sortiervorrichtung umfasst eine in Längsrichtung der zu sortierenden Bretter verfahrbare Brücke. Entlang einer Querschiene dieser Brücke ist ein Träger horizontal quer zu den Brettern verfahrbar, wobei die Bretter beim Verfahren von einer Bedienperson geführt werden müssen, die durch die Sortiereinrichtung bei der Positionierung der Bretter unterstützt wird.

Aus der europäischen Patentschrift EP 0 764 129 B1 ist eine Vorrichtung zum Anbringen von Abstandshalterlatten bekannt. Die Vorrichtung dient ebenfalls zum Stapeln länglicher Hölzer beziehungsweise von Langholzstücken, wobei zwischen den übereinander gelagerten bzw. gestapelten Lagen jeweils Latten quer zur sonstigen Stapelrichtung als Abstandshalter in den Stapel eingebracht werden sollen. Die Vorrichtung umfasst zunächst eine Stapelbildungsstation, der eine Zuführeinrichtung mit einem Förderer zum Transportieren von Holzstücken quer zu ihrer Längsrichtung zugeordnet ist. Die Holzstücke werden dabei so zugeführt, dass es jeweils an der Oberfläche des Stapels ankommen und dann auf den Stapel geschoben werden.

Der Stapeleinrichtung ist eine Lattenanordnungseinrichtung zugeordnet, die ihrerseits einen Förderer umfasst, der die Latten dem Stapel so zuführt, dass sie quer zur sonstigen Ausrichtung der Hölzer in dem Stapel zwischen den einzelnen Schichten der gestapelten Bretter angeordnet werden. Dabei können die Latten in einem zwischengeschaltetem Pufferlager gesammelt und von dort mit einem Transportmittel ergriffen, angehoben und in der gewünschten Position abgesetzt werden.

Die beiden zuletzt genannten Vorrichtungen betreffen also wiederum jeweils Stapelvorrichtungen für bereits bearbeitete Schnitthölzer und nicht etwa für unbebesäumte Hölzer, also Hölzer die noch über eine so genannte Waldkante verfügen und in keiner Weise zugeschnitten sind, also beispielsweise unbehandelte Seitenränder besitzen, die einer parallelen Anordnung nicht zugänglich sind, und in sich verworfen sein können also nicht plan gestapelt werden können.

Schnitthölzer müssen vor der Weiterverarbeitung etwa im Parkett- oder Möbelbereich oder als Holzverbundwerkstücke, etwa als Brettschichtholz oder Konstruktionsvollholz in der Regel nach dem Einschneiden, also von der Verarbeitung vom ursprünglichen Holzstamm zu einem gesägten Produkt luft- oder kammergetrocknet werden.

Hierzu werden die besagten Rohhölzer, also Bretter oder Bohlen, in einem besäumten oder unbesäumten Zustand zu Stapeln aufgesetzt. Zwischen jeder Brettlage wird eine Stapelleiste aus Holz oder Aluminium angeordnet, um für eine hinreichende Luftzirkulation zu sorgen, die für den angestrebten Trocknungsprozess Vorraussetzung ist. Nach Beendigung des Trocknungsprozesses in den entsprechenden Stapeln werden die Hölzer zu neuen Stapeln aufgesetzt und hierbei die Stapelleisten entnommen. Sie werden nun nur noch vereinzelt zur Stabilisierung des Stapels eingelegt. Im Laufe des Trocknungsprozesses verändert sich zumeist die Qualität der Hölzer, d. h. es kann während der Trocknung zu Einrissen kommen, die Hölzer können sich entlang der Längsachse verwinden oder sich werfen. Auch kann sich die Oberflächenfarbe der Hölzer während des Trocknungsprozesses verändern. Etwaige Asteinschnitte können sich lösen und herausfallen. Je nach Qualität des Holzes nach abgeschlossenem Trocknungsprozess ergeben sich unterschiedliche Verwendungen und Absatzgebiete für die Hölzer. Ziel des holzverarbeitenden Unternehmens muss es sein, die Hölzer anschließend geordnet nach Qualität und Abmessungen zu Stapeln zusammenzufassen, deren Hölzer möglichst eine homogene Qualität aufweisen. Im Ergebnis werden also aus einem Holzstapel, wie er für die Trocknung vorbereitet war, nach der Trocknung mehrere unterschiedliche Holzstapel zusammengestellt.

Hierzu ist nach abgeschlossenem Trocknungsprozess ein Umstapelvorgang erforderlich, der zumeist händisch mit maschineller Unterstützung erfolgt. Die einzelnen Hölzer der Stapel werden von Bedienern beurteilt, vermessen und hinsichtlich ihrer Qualität definiert. Anschließend werden die Bretter händisch oder mit mechanischer Hilfe zu Stapeln aufgesetzt. Dabei ist es die Aufgabe möglichst erfahrener Bediener, die Stapelbreite möglichst optimal auszunutzen, also keine zu großen Leerräume zwischen den Brettern entstehen zu lassen und dafür zu sorgen, dass sich die einzelnen Brettlagen derart überlappen, dass ein stabiler Stapel entsteht. Für die Erzeugung eines üblichen Stapels in der Holzverarbeitung werden jeweils bis zu drei und vier Personen benötigt.

Bei dem erwähnten Umstapelprozess werden unter anderem Vakuum-Saugroboter angesetzt und die Bretter mittels Portalkran ähnlichen Einrichtungen zu der jeweiligen Stapelstelle gefahren. Die Stapeloptimierung als solche, also die Stabilität und Homogenität des jeweiligen Stapels hängt also vom Geschick des eingesetzten Personals ab.

In anderem Zusammenhang sind in der Holzverarbeitung auch optische Erfassungs- und Vermessungssysteme für Hölzer bekannt, die jedoch bislang nicht für den Prozess der Umstapelung genutzt wurden.

Der Erfindung liegt die Aufgabe zu Grunde, dem aufwändigen Stapelprozess weitgehend zu automatisieren und in seinen Abläufen sowie in seinem Ergebnis zu optimieren.

Die der Erfindung zu Grunde liegende Aufgabe wird mittels einer Stapelvorrichtung gemäß Anspruch 1 bzw. durch ein Verfahren gemäß dem nebengeordneten Verfahrensanspruch 13 gelöst. Vorteilhafte Ausgestaltungen der Erfindung ergeben sich aus den abhängigen Ansprüchen 2 bis 12 sowie gemäß den Merkmalen der nachgeordneten Ansprüche 14 und 16.

Gemäß Hauptanspruch umfasst die Stapelvorrichtung zunächst eine Fördereinheit zur Beförderung des vereinzelten unbesäumten oder besäumten Schnittholzes. Nach Übergabe der Hölzer an die Fördereinheit durchlaufen diese eine Sensoreinheit, mit der die Holzmaße, die Holzkontur und/oder definierte Qualitätsparameter erfasst werden. Die Sensoreinheit übergibt dann die erfassten Daten an einen Optimierungsrechner, der anhand dieser Daten die Qualitätsklasse der jeweiligen Schnitthölzer bestimmt und dabei Hölzer gleicher Qualität jeweils zu einem Stapel zusammenfasst. Im Übrigen ermittelt der Optimierungsrechner anhand der erfassten Daten die optimale Zusammensetzung des Stapels. In Förderrichtung der Sensoreinheit nachgeschaltet ist eine Pufferstation angeordnet, in der die beförderten Schnitthölzer angehalten und zeitweise bevorratet werden. Dieser Pufferstation ist wiederum eine Hub- und/oder Schwenkvorrichtung zugeordnet, wobei es sich um eine quer zur Förderrichtung angeordnete Laufkatze mit einem integrierten Portalrechner handelt, der mit dem bereits erwähnten Optimierungsrechner in Datenverbindung steht. Mittels der Hub- und Schwenkvorrichtung werden dann die in der Pufferstation bevorrateten Schnitthölzer nach den Vorgaben des Optimierungsrechners entnommen und in deren Ablagebereich gemäß den Vorgaben des Optimierungsrechners in Stapeln abgelegt. Dabei kann die erfindungsgemäße Stapelvorrichtung gleichermaßen für getrocknete Schnitthölzer nach eingangs beschriebenen Trocknungsprozess wie auch für frisches Schnittholz mit Vorteil eingesetzt werden.

Die Pufferstation wird nach den Vorgaben eines so genannten chaotischen Lagers beschickt. Das heißt die Schnitthölzer werden dort zunächst ungeordnet zwischengelagert, aber deren jeweilige Position exakt gespeichert und dann die Hölzer zur Errichtung des Stapels gemäß der Stapelvorgabe des Optimierungsrechners entnommen.

Die der Fördereinheit zugeordnete Sensoreinheit umfasst vorzugsweise wenigstens einen Laser zur Vermessung der Schnitthölzer und gegebenenfalls zur Erfassung der Konturen der Schnitthölzer, also etwaiger Verwerfungen. Zusätzlich umfasst die Sensoreinheit wenigstens eine Kamera, zur Erfassung der jeweiligen Holzqualität, wobei in diesem Zusammenhang der Optimierungsrechner idealerweise mit einer Bilderkennungsvorrichtung versehen ist, die anhand der erfassten Bilddaten die im Holzbereich entscheidender Qualitätsparameter, wie Farbe, Einschüsse und Risse erkennt und in Abhängigkeit hiervon die Qualität der jeweiligen Hölzer bestimmbar macht.

Der Optimierungsrechner bestimmt somit anhand der von der Sensoreinheit gelieferten Daten die Qualitätsklasse jedes einzelnen Schnittholzes selbsttätig.

In verbesserter Ausführung ist der Optimierungsrechner mit einem Bedieninterface versehen, so dass ein erfahrenes Bedienpersonal in der Lage ist, aufgrund offensichtlicher Berechnungsfehler entstandene Fehleinschätzungen zu korrigieren und somit dem Erfassungsprozess zu optimieren.

Wie bereits erwähnt, werden mit dem Optimierungsrechner aber nicht nur die Qualitätsparameter der Hölzer definiert und in Abhängigkeit hiervon jedes einzelne Schnittholz einem Stapel zugeordnet. Zusätzlich werden mit dem Optimierungsrechner auch die jeweiligen Stapelkriterien ermittelt und an den Portalrechner der Hub- und Schwenkvorrichtung übergeben, die dann die Schnitthölzer in Abhängigkeit von den erhaltenen Vorgaben in den jeweiligen Stapeln ablegt. Die Bewertungskriterien für eine bestmögliche Lage der Hölzer in dem Holzstapel sind ein möglicher dichter Abstand zwischen den Hölzern. Hierzu muss beispielsweise die Konizität der Hölzer berücksichtigt werden und diese gegebenenfalls mittels der Schwenkeinrichtung gedreht werden. , Der Optimierungsrechner beachtet dabei vorgebbare Stapelbilder, indem beispielsweise Hölzer die zu einem Stamm gehören in der richtigen Reihenfolge aufgestapelt werden. Gemäß der sich insoweit ergebenden Reihenfolge der Stapelung werden die Hölzer mittels der Hub- und Schwenkeinrichtung aus der Pufferstation abgeholt und gemäß der vorgegebenen Anordnung in ihren jeweiligen Stapeln abgelegt.

Die Hölzer sollten überlappend gestapelt werden, so dass ein stabiler Stapel entsteht. Die hierbei entstehende Verzahnung der Hölzer erhöht die Stabilität des Stapels.

Darüber hinaus werden nebeneinander in einer Lage des Stapels möglichst Schnitthölzer mit einander ergänzenden Konturen derart angeordnet, dass neben ein sich in Richtung der einen Stirnseite verjüngendes Schnittholz neben ein sich in Richtung derselben Stirnseite in etwa gleichen Winkel erweiterndes Schnittholz (2) abgelegt wird.

Die Pufferstation als solche ist dabei als ein Abschnitt der Fördereinheit zu betrachten, dem beidseits, vorzugsweise höhenverstellbare, Stopper zugeordnet sind, mit denen die geförderten Schnitthölzer, die beidseits über die Fördereinheit überstehen, im Bereich der Pufferstation bei laufender Fördereinheit angehalten werden können. Idealerweise sind mehrere in Fördereinrichtung hintereinander jeweils aneinander gegenüberliegende Stopper paarweise angeordnet, um gleichzeitig mehrere Schnitthölzer in der Pufferstation bevorraten zu können. Je größer die Anzahl der in der Pufferstation bevorrateten Schnitthölzer ist, umso größer ist die Eingriffsmöglichkeit des Optimierungsrechners im Interesse einer optimalen Stapelung der Schnitthölzer.

Es hat sich bewährt, dass die Hub- und Schwenkeinrichtung mit einem Vakuum-Saugkissen zur Aufnahme der in der Pufferstation bevorrateten Schnitthölzer versehen ist. Alternativ können selbstverständlich auch herkömmliche Greifsysteme zum Einsatz kommen.

Die mittels der Hub- und Schwenkvorrichtung aufgenommenen Schnitthölzer werden dann auf im Ablagebereich der Hub- und Schwenkeinrichtung angeordneten Absenkeinheiten, vorzugsweise so genannten Schererhubtischen, abgelegt. Die Absenkeinheiten werden jeweils nach Aufstapelung einer vollständigen Lage um die jeweilige Lagestärke abgesenkt, um auf diese Weise sicherzustellen, dass die Ablage der Schnitthölzer auf die Stapel jeweils in gleicher Höhe erfolgen kann. Dies erleichtert die Ansteuerung der Hub- und Schwenkvorrichtungen und stellt eine optimale Stapelung der Schnitthölzer auf der erwähnten Absenkeinheit sicher.

In weiterer Verbesserung der Erfindung sind die Absenkeinheiten fahrbar ausgebildet, so dass die Absenkeinheiten nach vollständiger Aufstapelung des jeweiligen Holzstapels aus dem Ablagebereich der Hub- und Schwenkvorrichtung selbsttätig oder manuell herausgefahren werden können und das fertig gestapelte Schnittholz zu einer Abholstation verbracht werden kann.

Wie der Erfindung zu Grunde liegende Aufgabe wird ebenfalls durch ein Verfahren gemäß den Merkmalen des Anspruchs 14 gelöst.

In vorteilhafter Weiterbildung des erfindungsgemäßen Verfahrens kann dieses auch dazu genutzt werden, einen sogenannten Abbund werkseitig herzustellen. Hierunter versteht man ein Holzgebinde einer vollständigen Konstruktion, etwa eines Dachstuhls, die so gestapelt sind, dass die Hölzer vor Ort, d.h. an der Baustelle in der Montagereihenfolge entnommen werden können. Das erfindungsgemäße Verfahren ist hierzu insbesondere deshalb geeignet, weil im Rahmen dieses Verfahrens nicht nur die Maße der Schnitthölzer sondern auch deren Kontur erfasst wird. Die Hölzer sind also durch ihre Kontur auch eindeutig hinsichtlich ihrer Funktion in einer Konstruktion und damit auch hinsichtlich des Montagezeitpunktes definiert und können dementsprechend in dem Stapel des Gebindes mit Hilfe des Optimierungsrechners und der Stapelvorrichtung positioniert werden.

In besonderer Ausgestaltung werden auch bei diesem Verfahren die Absenkeinheiten jeweils nach Aufstapelung einer vollständigen Lage um die jeweilige Lagestärke abgesenkt.

Nach vollständiger Aufstapelung eines Stapels auf die erwähnte Absenkeinheit werden die Absenkeinheiten manuell oder selbsttätig zu einer Abholstation gefahren und an die Stelle der weggefahrenen Absenkeinheit eine leere Absenkeinheit zur weiteren Aufstapelung manuell oder selbsttätig gefahren. Hierdurch ist sichergestellt, dass der Stapelprozess insoweit nicht unterbrochen werden muss.

Die Erfindung wird anhand eines in der Zeichnung nur schematisch dargestellten Ausführungsbeispiels näher erläutert. Das Ausführungsbeispiel hält lediglich eine beispielhafte Ausgestaltung der Erfindung dar. Im Schutzbereich ist jedoch allein die im Rahmen der Ansprüche beanspruchte Merkmalskombination entscheidend.

Es zeigen:
- Figur 1: Der Übergabebereich Schnitthölzer einer Stapelvorrichtung in einer Draufsicht,
- Figur 2: eine Pufferstation und dem Ablagebereich der Stapelvorrichtung in einer Draufsicht,
- Figur 3: die in Figur 2 gezeigten Puffer- und Ablagebereiche in einer Seitenansicht und
- Figur 4: einen mittels einer Stapelvorrichtung gemäß den Fig.1-3 zusammengesetzter Abbund in einer perspektivischen Ansicht.

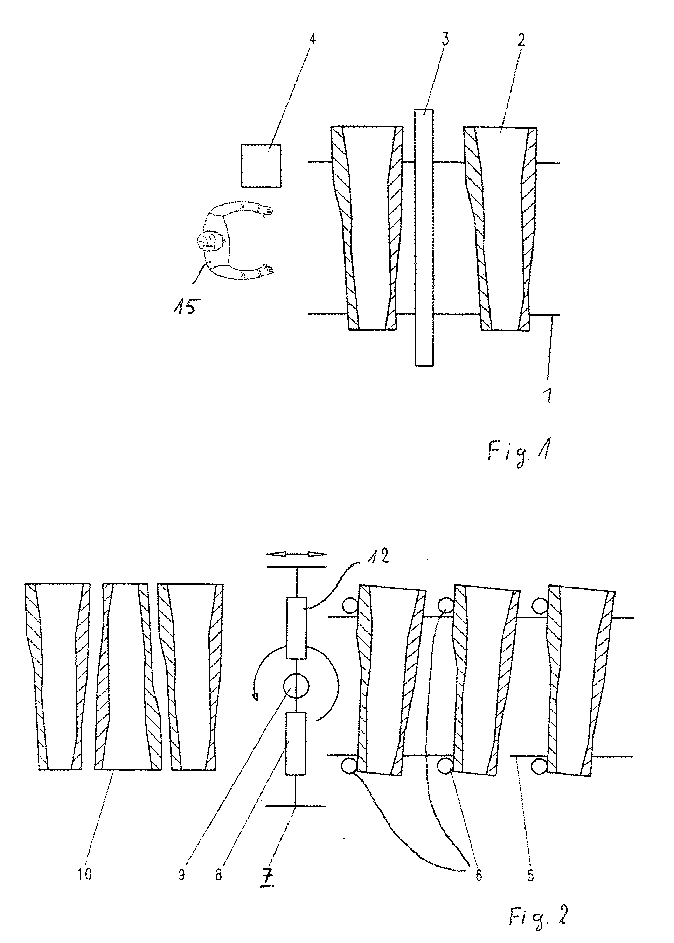

Gemäß der Darstellung in Figur 1 werden getrocknete oder frische Schnitthölzer 2 einer an sich herkömmlichen Fördereinheit 1, also beispielsweise einem Bandförderer, übergeben. Dem Eingangsbereich der Fördereinheit 1 ist eine Sensoreinheit 3 derart zugeordnet, dass die Sensoreinheit 3 torartig die Fördereinheit 1 übergreift, also die Schnitthölzer 2 mittels der Fördereinheit 1 durch die Sensoreinheit 3 hindurch gefördert werden. In der Sensoreinheit 3 sind hier nicht weiter dargestellt diverse Erlassungsvorrichtungen integriert, wie etwa eine Laserabtastung und eine Bilderfassungsvorrichtung. Mittels der Laserabtastung werden die durch die Sensoreinheit 3 geförderten Schnitthölzer 2 hinsichtlich ihrer Abmessungen, und ihrer Kontur erfasst. Mittels der Bilderfassungsvorrichtung werden die Schnitthölzer 2 hinsichtlich ihrer für die Qualität relevanten Parameter, wie der Farbe, etwaiger Einrisse, Astlöcher und der Oberflächenbeschaffenheit erfasst. Die mittels der Sensoreinheit 3 erfassten Daten werden an einen Optimierungsrechner 4 ergeben, der entweder vor Ort oder auch dezentral angeordnet sein kann. Sinnvoll ist es allerdings, wenn der Optimierungsrechner 4, wie in Figur 1 dargestellt, im Eingangsbereich der Fördereinheit 1 angeordnet. Der Optimierungsrechner 4 weist idealerweise ein Bedieninterface auf, so dass eine Bedienperson 15 mit dem Optimierungsrechner 4 interagieren kann. Der Optimierungsrechner 4 bestimmt anhand der von der Sensoreinheit 3 übermittelten Daten die Qualität der beförderten Schnitthölzer 2 und legt somit fest, welchem Stapel das jeweilige Schnittholz 2 zugeordnet wird. Im Weiteren ermittelt der Optimierungsrechner 4 anhand der Abmessungen der Schnitthölzer 2 die optimale Konfiguration des jeweiligen Stapels, also die Anordnung der Schnitthölzer 2 in dem Stapel und die sich daraus ergebende Stapelreihenfolge. Die Bedienperson 15 hat die Möglichkeit, über das Bedieninterface gegebenenfalls die von dem Optimierungsrechner 4 ermittelte Qualitätsklasse zu korrigieren oder sonstig einzugreifen.

In Förderrichtung den in Figur 1 dargestellten Eingangsbereich der Stapelvorrichtung nachgeschaltet ist die in Figur 2 ebenfalls in einer Draufsicht dargestellte Pufferstation 5. In der Pufferstation 5 können die mittels der Fördereinheit 1 beförderten Schnitthölzer 2 zeitweise bevorratet werden. Hierzu sind im Bereich der Pufferstation 5 jeweils beidseits der Fördereinheit 1 höhenverstellbare Stopper 6 jeweils paarweise einander gegenüberliegend angeordnet, mit denen die Schnitthölzer 2 bei laufender Fördereinheit 1 in der Pufferstation 5 angehalten werden können. Die Pufferstation 5 wird von einer quer zu Förderrichtung der Fördereinheit 1 angeordneten Laufkatzeneinheit 7 übergriffen, die die sowohl quer zur Förderrichtung der Fördereinheit 1 als auch in Förderrichtung verfahrbar ist. Dabei ist die Laufkatzeneinheit 7 auf eine Laufkatzenschiene 11 verfahrbar. Die Laufkatzeneinheit 7 umfasst ein Vakuum-Saugkissen 8 bei Aufnahme der Schnitthölzer 2 und eine Schwenkeinheit 9 um die Schnitthölzer 2 bedarfsweise drehen zu können. Insgesamt wird die Laufkatzeneinheit 7 von einem der Laufkatzeneinheit 7 zugeordneten Portalrechner 12 gesteuert, der mit dem Optimierungsrechner 4 in Datenverbindung steht. Der Portalrechner 12 steuert in Abhängigkeit von den Vorgaben des Optimierungsrechners 4 die Aufnahme der Schnitthölzer 2 mittels des Vakuum-Saugkissens 8, gegebenenfalls deren Verschwenkung mittels der Schwenkeinheit 9 und deren Transport aus der Pufferstation 5 in den Ablagebereich 10 der Stapelvorrichtung.

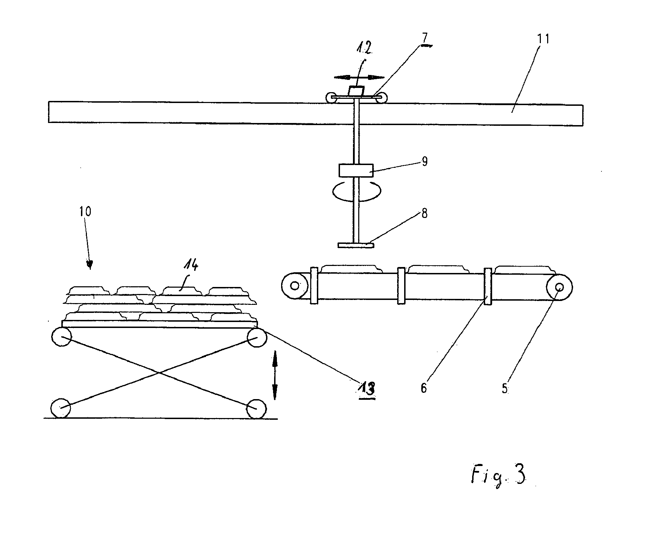

Wie aus der Seitenansicht in Figur 3 ersichtlich, sind im Ablagebereich 10 der Stapelvorrichtung eine oder mehrere Holzstapel 14 angeordnet, die jeweils auf einer Absenkeinheit 13 abgelegt sind. Bei der Absenkeinheit 13 handelt es sich gemäß der Darstellung in Figur 3 um einen Scherenhubtisch. Dabei wird die Absenkeinheit 13 jeweils nach Aufstapelung einer vollständigen Lage um die jeweilige Lagestärke abgesenkt um sicherzustellen, dass die Schnitthölzer 2 jeweils in gleicher Höhe auf den Stapel 14 abgelegt werden. Idealerweise ist die Absenkeinheit 13 fahrbar ausgebildet, um nach vollständiger Aufstapelung des jeweiligen Holzstapels 14 die Absenkeinheit 13 aus dem Ablagebereich 10 in einem Abholbereich verfahren zu können und anstelle dieser Absenkeinheit 13 eine andere leere Absenkeinheit 13 zur weiteren Aufstapelung im Ablagebereich 10 positionieren zu können.

Nachdem die erfindungsgemäße Stapelverrichtung notwendigerweise mit einer Sensoreinheit versehen ist, die nicht nur die Abmessungen sondern auch die Konturen der gestapelten Hölzer vor und im Zusammenhang mit deren Stapelung erfasst, kann die erfindungsgemäße Stapelvorrichtungen mit Vorteil auch dazu eingesetzt werden entweder ab Werk oder an der Baustelle die Hölzer einer vollständigen Konstruktion also etwa eines Dachstuhls oder eines Gartenhauses derart zu einem Abbund 16 zusammenzufassen, dass dieser möglichst kompakt und optimal gestapelt ist. Die Kommissionierung derartiger Abbünde musste bisher von Hand vorgenommen worden bzw. mit den in der Beschreibungungseinleitung dargestellten Halbautomaten.

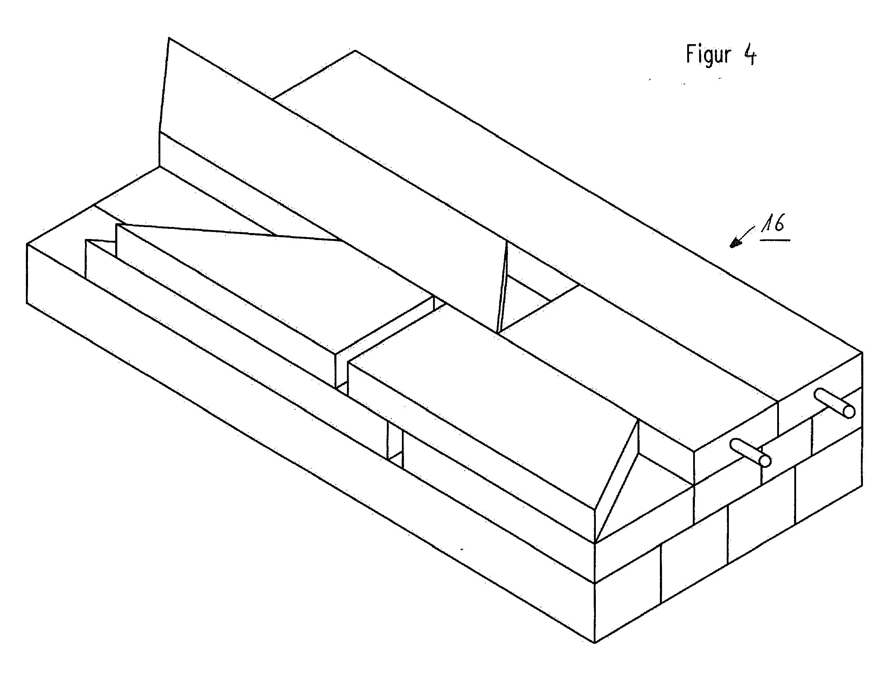

Ein Beispiel für einen solchen Abbund 16, hier eines Dachstuhls, ist in Figur 4 in einer perspektivischen Ansicht dargestellt. Die Stapelvorrichtung kann also auch dazu eingesetzt werden in der holzverarbeitenden Industrie also im Werk einen entsprechenden Abbund 16 zu erzeugen, oder aber wenn die entsprechenden Hölzer an der Baustelle angeliefert werden mittels der erfindungsgemäßen Stapelvorrichtung quasi ab dem Laster eine Stapelung mithilfe der Stapelvorrichtung voll automatisch vorzunehmen. Dabei können auch weitere Stapelvorgaben neben einer möglich kompakten und optimalen Stapelung berücksichtigt werden, wie etwa die übliche Montagereihenfolge der Hölzer eines Abbundes 16, so dass diese in der richtigen Montagefolge vom Stapel entnommen werden können. Die entsprechende Stapelung der Hölzer bietet somit nicht nur einen Vorteil im Hinblick auf die Stapelung beziehungsweise Lagerung der Hölzer eines Gewerkes, sondern kann gleichzeitig auch noch als Montagehilfe eingesetzt werden. Auch hierbei kann ansonsten erforderliches Fachpersonal eingespart oder zumindest reduziert werden.

Vorstehend ist somit eine Stapelvorrichtung beschrieben, mit der der ansonsten mit hohem Zeit- und Personalaufwand vor und nach dem Trocknungsprozess des Schnittholzes 2 erforderliche Stapelprozess zumindest weitgehend automatisiert ablaufen und dabei eine hohe Stapelgüte und ― homogenität der Holzstapel 14 erreicht werden kann.

### BEZUGSZEICHENLISTE

- 1: Fördereinheit
- 2: Schnittholz
- 3: Sensoreinheit
- 4: Optimierungsrechner
- 5: Pufferstation
- 6: Stopper
- 7: Laufkatzeneinheit
- 8: Vakuum-Saugkissen
- 9: Schwenkeinheit
- 10: Ablagebereich
- 11: Laufkatzenschiene
- 12: Portalrechner
- 13: Absenkeinheit
- 14: Holzstapel
- 15: Bedienperson
- 16: Abbund

## Patentansprüche

1. Stapelvorrichtung für besäumtes und unbesäumtes Schnittholz (2), insbesondere Bohlen und/oder Bretter, mit einer Fördereinheit (1) zur Beförderung des vereinzelten Schnittholzes (2), der eine Sensoreinheit (3) zur Erfassung der Holzmaße und -Kontur und/oder definierter Qualitätsparameter zugeordnet ist, wobei die Sensoreinheit (3) mit einem Optimierungsrechner (4) datenverbunden ist, sowie einer der Sensoreinheit (3) in Förderrichtung des Schnittholzes (2) nachgeordneten Pufferstation(5) zur zeitweisen Bevorratung des geförderten Schnittholzes (2) bei laufender Fördereinheit (1), wobei dieser Pufferstation (5) eine oberhalb der Pufferstation (5), quer zur Förderrichtung des Schnittholzes (2), angeordnete Laufkatzeneinheit (7) mit einer Hub- und Schwenkvorrichtung (8, 9), die von einem mit dem Optimierungsrechner (4) datenverbundenen Portalrechner (12) gesteuert ist, derart zugeordnet ist, dass mittels der Hub- und Schwenkvorrichtung (8, 9) die in der Pufferstation (5) bevorrateten Schnitthölzer (2) gemäß den Vorgaben des Optimierungsrechners (4) entnehmbar und auf einem oder mehreren jeweils im Ablagebereich (10) der Hub- und Schwenkeinrichtung (8, 9) anzuordnenden Stapel ablegbar sind.

2. Stapelvorrichtung nach Anspruch 1, **dadurch gekennzeichnet, dass** die Pufferstation (5) als chaotisches Lager angelegt ist, d.h. dass die Hölzer hier zunächst ungeordnet abgelegt, aber ihre Position gespeichert wird und sie dann gemäß der vom Optimierungsrechner (4) entwickelten Stapelvorgabe entnommen werden, um den Stapel gemäß dem vom Optimierungsrechner (4) entwickelten Stapelplan aufzurichten.

3. Stapelvorrichtung nach Anspruch 1 oder 2, **dadurch gekennzeichnet, dass** die Sensoreinheit (3) wenigstens einen Laser zur Vermessung der Schnitthölzer (2) und/oder wenigstens eine Kamera zur Erfassung der Qualitätsmerkmale des Holzes umfasst.

4. Stapelvorrichtung nach Anspruch 1, 2 oder 3, **dadurch gekennzeichnet, dass** mittels des Optimierungsrechners (4) der von der Sensoreinheit (3) gelieferten Daten die Qualitätsklasse jedes einzelnen Schnittholzes (2) selbsttätig bestimmbar ist.

5. Stapelvorrichtung nach einem der vorhergehenden Ansprüche, **dadurch gekennzeichnet, dass** der Optimierungsrechner (4) ein Bedieninterface aufweist über das gegebenenfalls die Qualitätsbestimmung des Optimierungsrechners (4) manuell korrigierbar ist.

6. Stapelvorrichtung nach einem der vorhergehenden Ansprüche, **dadurch gekennzeichnet, dass** , mittels des Optimierungsrechners (4) anhand der von der Sensoreinheit (3) gelieferten Daten nach Qualitätsklassen geordnete Stapel bestimmbar sind und die jeweils bestmögliche Stapelung der einen Stapel zugeordneten Schnitthölzer (2) nach den Kriterien größtmögliche Stapeldichte und - stabilität ermittelbar sind und eine entsprechende Stapelvorgabe an dem Portalrechner (12) übermittelbar ist.

7. Stapelvorrichtung nach Anspruch 6, **dadurch gekennzeichnet, dass** die Schnitthölzer (2) soweit möglich einander überlappend gestapelt werden.

8. Stapelvorrichtung nach Anspruch 5 oder 6, **dadurch gekennzeichnet, dass** die Schnitthölzer (2) derart geschichtet werden, dass nebeneinander idealerweise einander ergänzende Konturen der Schnitthölzer angeordnet werden.

9. Stapelvorrichtung nach einem der vorhergehenden Ansprüche, **dadurch gekennzeichnet, dass** in der Pufferstation (5) beidseits der Fördereinheit (1) paarweise, jeweils einander gegenüberliegend, vorzugsweise höhenverstellbare, Stopper (6) derart angeordnet sind, dass die mittels der Fördereinheit (1) geförderten Schnitthölzer (2) bei laufender Fördereinheit (1) in der Pufferstation (5) zumindest zeitweise bevorratbar sind.

10. Stapelvorrichtung nach einem der vorhergehenden Ansprüche, **dadurch gekennzeichnet, dass** die Hub- und Schwenkvorrichtung (8, 9) ein Vakuum-Saugkissen (8) zur Aufnahme der in der Pufferstation (5) bevorrateten Schnitthölzer (2) aufweist.

11. Stapelvorrichtung nach einem der vorhergehenden Ansprüche, **dadurch gekennzeichnet, dass** im Ablagebereich (10) der Hub- und Schwenkvorrichtung (8, 9) wenigstens eine Absenkeinheit (13), vorzugsweise ein Scherenhubtisch, angeordnet ist, der jeweils nach Aufstapelung einer vollständigen Lage um die jeweilige Lagestärke absenkbar ist.

12. Stapelvorrichtung nach Anspruch 9, **dadurch gekennzeichnet, dass** die Absenkeinheit (13) fahrbar ausgebildet ist.

13. Verfahren zur zumindest weitgehend selbstständigen Stapelung von besäumten oder unbesäumten Schnitthölzern (2) mit folgenden Verfahrensschritten;
- Vereinzelte Übergabe von Schnitthölzern (2) an eine Fördereinheit (1),
- Erfassung der Holzmaße und -Kontur und/oder definierter Qualitätsparameter der Schnitthölzer (2) mittels einer der Fördereinheit (1) zugeordneten Sensoreinheit (3),
- Übermittlung der mittels der Sensoreinheit (3) erfassten Daten an einem Optimierungsrechner (4),
- Bevorratung der Schnitthölzer (2) in einer der Sensoreinheit (3) in Förderrichtung nachgeschalteten Pufferstation (5),
- Entnahme der Schnitthölzer (2) mittels einer Hub- und Schwenkvorrichtung (8, 9) aus der Pufferstation (5) nach Maßgabe der von dem Optimierungsrechner (4) übermittelten Stapelvorgaben,
- Ablage der Schnitthölzer (2) mittels der Hub- und Schwenkvorrichtung (8, 9) auf einen oder mehreren im Ablagebereich (10) der Hub- und Schwenkvorrichtung angeordneten Stapeln gemäß dem vom Optimierungsrechner (4) übermittelten Stapelvorgaben.

14. Verfahren nach Anspruch 13, **dadurch gekennzeichnet, dass** die fertig zugeschnittenen Schnitthölzer (2) einer zusammenhängenden Konstruktion, etwa eines Dachstuhls, mittels der Stapelvorrichtung (1) zu einem sogenannten Abbund zusammengefasst, das heißt zu einem kompakten Stapel derart gestapelt und gebunden werden, dass sie am Einbauort in Montagereihenfolge vom Stapel entnehmbar sind.

15. Verfahren nach Anspruch 14, **dadurch gekennzeichnet, dass** die Stapel mittels der Hub- und Schwenkvorrichtung (8, 9) auf im Ablagebereich (10) der Hub- und Schwenkvorrichtung (8, 9) angeordneten Absenkeinheiten (13), insbesondere Scherenhubtischen, abgelegt und die Absenkeinheiten (13) nach Aufstapelung einer vollständigen Lage um die jeweilige Lagestärke abgesenkt werden.

16. Verfahren nach Anspruch 14 oder 15, **dadurch gekennzeichnet, dass** die fahrbar ausgebildeten Absenkeinheiten (13) nach vollständiger Aufstapelung eines Stapels manuell oder selbsttätig zu einer oder mehreren Abholstationen gefahren werden und an die Stelle der weggefahrenen Absenkeinheit (13) eine weitere leere Absenkeinheit (13) zur weiteren Aufstapelung gefahren wird.

## Claims

1. A stacking device for trimmed and untrimmed sawn timber (2), in particular planks and/or boards, having a conveyor unit (1) for conveying the isolated sawn timber (2), to which a sensor unit (3) is assigned for detecting the timber dimensions and contour and/or defined quality parameters, wherein the sensor unit (3) has a data connection to an optimization computer (4), and a buffer station (5), which is arranged downstream from the sensor unit (3) in the conveyor direction of the sawn timber (2), for temporarily storing the conveyed sawn timber (2) with running conveyor unit (1), wherein this buffer station (5) is assigned a trolley unit (7), which is arranged above the buffer station (5), transversely to the conveyor direction of the sawn timber (2), having a lifting and pivoting device (8, 9), which is controlled by a gantry computer (12) having a data connection to the optimization computer (4), in such a manner that by means of the lifting and pivoting device (8, 9), the sawn timbers (2) stored in the buffer station (5) can be removed and deposited according to the specifications of the optimization computer (4) on one or more stacks to be arranged respectively in the depositing region (10) of the lifting and pivoting device (8, 9).

2. The stacking device according to Claim 1, **characterized in that** the buffer station (5) is created as a chaotic warehouse, i.e., the pieces of timber are deposited initially disordered here, but the position thereof is stored, and they are then removed according to the stacking specification developed by the optimization computer (4), to align the stack according to the stacking plan developed by the optimization computer (4).

3. The stacking device according to Claim 1 or 2, **characterized in that** the sensor unit (3) comprises at least one laser for surveying sawn timbers (2) and/or at least one camera for detecting the quality features of the wood.

4. The stacking device according to Claim 1, 2, or 3, **characterized in that** the quality class of each individual sawn timber (2) can be determined autonomously by means of the optimization computer (4) from the data supplied by the sensor unit (3).

5. The stacking device according to one of the preceding claims, **characterized in that** the optimization computer (4) has an operating interface, via which the quality determination of the optimization computer (4) can be manually corrected if necessary.

6. The stacking device according to one of the preceding claims, **characterized in that** stacks ordered according to quality classes can be determined by means of the optimization computer (4) on the basis of the data supplied by the sensor unit (3) and the respective best possible stacking of the sawn timbers (2) associated with a stack can be determined according to the criteria of greatest possible stack density and stack stability and a corresponding stack specification can be transmitted to the gantry computer (12).

7. The stacking device according to Claim 6, **characterized in that** the sawn timbers (2) are stacked overlapping one another as much as possible.

8. The stacking device according to Claim 5 or 6, **characterized in that** the sawn timbers (2) are layered in such a manner that ideally contours of the sawn timbers which supplement one another are arranged adjacent to one another.

9. The stacking device according to one of the preceding claims, **characterized in that** preferably vertically-adjustable stoppers (6) are arranged in the buffer station (5) in pairs on both sides of the conveyor unit (1), opposite to one another in each case, in such a manner that the sawn timbers (2) conveyed by means of the conveyor unit (1) can be at least temporarily stored in the buffer station (5) with running conveyor unit (1).

10. The stacking device according to one of the preceding claims, **characterized in that** the lifting and pivoting device (8, 9) has a vacuum suction cushion (8) for receiving the sawn timbers (2) stored in the buffer station (5).

11. The stacking device according to one of the preceding claims, **characterized in that**, in the depositing region (10) of the lifting and pivoting device (8, 9), at least one lowering unit (13), preferably a scissors lift table, is arranged, which can be lowered by the respective layer thickness in each case after stacking of a complete layer.

12. The stacking device according to Claim 9, **characterized in that** the lowering unit (13) is implemented as movable.

13. A method for at least substantially autonomous stacking of trimmed or untrimmed sawn timbers (2) having the following method steps;
- isolated transfer of sawn timbers (2) to a conveyor unit (1),
- detection of the timber dimensions and contour and/or defined quality parameters of the sawn timbers (2) by means of a sensor unit (3) associated with the conveyor unit (1),
- transmission of the data detected by means of the sensor unit (3) to an optimization computer (4),
- storage of the sawn timbers (2) in a buffer station (5) connected downstream from the sensor unit (3) in the conveyor direction,
- removal of the sawn timbers (2) by means of a lifting and pivoting device (8, 9) from the buffer station (5) according to the stack specifications transmitted from the optimization computer (4),
- depositing the sawn timber (2) by means of the lifting and pivoting device (8, 9) on one or more stacks, which are arranged in the depositing region (10) of the lifting and pivoting device, according to the stack specifications transmitted from the optimization computer (4).

14. The method according to Claim 13, **characterized in that** the finished cut-to-size sawn timbers (2) of a coherent structure, such as a roof truss, are assembled by means of the stacking device (1) into a so-called assembly, i.e., are stacked and bound into a compact stack in such a manner that they are removable at the installation location in installation sequence from the stack.

15. The method according to Claim 14, **characterized in that** the stack is deposited by means of the lifting and pivoting device (8, 9) on lowering units (13), in particular scissors lift tables, which are arranged in the depositing region (10) of the lifting and pivoting device (8, 9), and the lowering units (13) are lowered by the respective layer thickness after stacking of a complete layer.

16. The method according to Claim 14 or 15, **characterized in that** the lowering units (13), which are implemented as movable, are moved manually or autonomously to one or more collection stations after complete stacking of a stack and a further empty lowering unit (13) is moved for further stacking to the position of the lowering unit (13) which was moved away.

## Revendications

1. Dispositif d'empilage pour bois scié (2) déligné ou non déligné, en particulier des poutres et/ou des planches, avec une unité de transport (1) pour le transport des bois sciés (2) isolés, à laquelle est associée une unité de capteur (3) pour la détection des dimensions et du contour du bois et/ou de paramètres de qualité définis, l'unité de capteur (3) étant connectée pour communiquer des données à un calculateur d'optimisation (4), et avec une station tampon (5) située après l'unité de capteur (3) dans le sens de transport du bois scié (2) pour emmagasiner temporairement le bois scié (2) transporté pendant que l'unité de transport (1) fonctionne, cette station tampon (5) étant associée à une unité de chariot (7) disposée au-dessus de la station tampon (5), transversalement par rapport au sens de transport du bois scié (2), avec un dispositif élévateur et pivotant (8, 9) commandé par un calculateur de portique (12) connecté pour communiquer des données au calculateur d'optimisation (4), de telle manière que les bois sciés (2) emmagasinés dans la station tampon (5) puissent être extraits de celle-ci au moyen du dispositif élévateur et pivotant (8, 9) selon les consignes du calculateur d'optimisation (4) et puissent être déposés en une ou plusieurs piles à disposer dans la zone de dépose (10) du dispositif élévateur et pivotant (8, 9).

2. Dispositif d'empilage selon la revendication 1, **caractérisé en ce que** la station tampon (5) est organisée comme un dépôt chaotique, c'est-à-dire que les bois y sont d'abord déposés sans ordre mais leur position est mémorisée et ils sont ensuite prélevés selon la consigne d'empilage élaborée par le calculateur d'optimisation (4) pour ordonner la pile selon le plan d'empilage élaboré par le calculateur d'optimisation (4).

3. Dispositif d'empilage selon la revendication 1 ou 2, **caractérisé en ce que** l'unité de capteur (3) comprend au moins un laser pour mesurer les bois sciés (2) et/ou au moins une caméra pour acquérir les caractéristiques de qualité du bois.

4. Dispositif d'empilage selon la revendication 1, 2 ou 3, **caractérisé en ce que** la classe de qualité de chaque bois scié (2) peut être déterminée automatiquement au moyen du calculateur d'optimisation (4) à partir des données fournies par l'unité de capteur (3).

5. Dispositif d'empilage selon l'une des revendications précédentes, **caractérisé en ce que** le calculateur d'optimisation (4) présente une interface de commande et la détermination de la qualité par le calculateur d'optimisation (4) peut être corrigée manuellement si nécessaire.

6. Dispositif d'empilage selon l'une des revendications précédentes, **caractérisé en ce que** le calculateur d'optimisation (4) peut déterminer à l'aide des données fournies par l'unité de capteur (3) des piles ordonnées par classes de qualité et déterminer le meilleur empilement possible des bois sciés (2) disposés dans une pile selon les critères de densité et de stabilité maximales de la pile et envoyer une consigne d'empilage correspondante au calculateur de portique (12).

7. Dispositif d'empilage selon la revendication 6, **caractérisé en ce que** les bois sciés (2) sont disposés autant que possible en se chevauchant les uns les autres.

8. Dispositif d'empilage selon la revendication 5 ou 6, **caractérisé en ce que** les bois sciés (2) sont empilés en couches de telle façon que des contours complémentaires les uns des autres des bois sciés soient idéalement disposés les uns à côté des autres.

9. Dispositif d'empilage selon l'une des revendications précédentes, **caractérisé en ce que** des butées (6), de préférence réglables en hauteur, sont disposées par paires se faisant face dans la station tampon (5) de part et d'autre de l'unité de transport (1), de telle façon que des bois sciés (2) transportés au moyen de l'unité de transport (1) puissent être au moins partiellement emmagasinés dans la station tampon (5) pendant que l'unité de transport (1) fonctionne.

10. Dispositif d'empilage selon l'une des revendications précédentes, **caractérisé en ce que** le dispositif élévateur et pivotant (8, 9) comprend un coussin d'aspiration à vide (8) pour recevoir les bois sciés (2) emmagasinés dans la station tampon (5).

11. Dispositif d'empilage selon l'une des revendications précédentes, **caractérisé en ce qu'**au moins une unité d'abaissement (13), de préférence une table élévatrice à parallélogramme, est disposée dans la zone de dépose (10) du dispositif élévateur et pivotant (8, 9) et peut, après l'empilage de chaque couche complète, être abaissée de l'épaisseur de la couche.

12. Dispositif d'empilage selon la revendication 9, **caractérisé en ce que** l'unité d'abaissement (13) est conçue pour être mobile.

13. Procédé pour l'empilage au moins en grande partie automatique de bois sciés (2) délignés ou non délignés, comprenant les étapes de procédé suivantes :
- transfert isolé de bois sciés (2) vers une unité de transport (1),
- acquisition des cotes et du contour du bois et/ou de paramètres de qualité définis des bois sciés (2) au moyen d'une unité de capteur (3) associée à l'unité de transport (1),
- transmission des données acquises au moyen de l'unité de capteur (3) à un calculateur d'optimisation (4),
- emmagasinage des bois sciés (2) dans une station tampon (5) montée en aval de l'unité de capteur (3) dans le sens du transport,
- retrait des bois sciés (2) au moyen d'un dispositif élévateur et pivotant (8, 9) hors de la station tampon (5) en fonction des consignes d'empilage transmises par le calculateur d'optimisation (4),
- dépose des bois sciés (2) au moyen du dispositif élévateur et pivotant (8, 9) sur une ou plusieurs piles disposées dans la zone de dépose (10) du dispositif élévateur et pivotant selon les consignes d'empilage transmises par le calculateur d'optimisation (4).

14. Procédé selon la revendication 13, **caractérisé en ce que** les bois sciés (2) coupés d'une construction cohérente, par exemple d'une charpente de toiture, sont empilés et liés au moyen du dispositif d'empilage (1) pour les réunir en un faisceau, autrement dit une pile compacte, de telle manière qu'ils puissent être retirés de la pile sur le lieu d'installation dans l'ordre d'assemblage.

15. Procédé selon la revendication 14, **caractérisé en ce que** les piles sont déposées au moyen du dispositif élévateur et pivotant (8, 9) sur des unités d'abaissement (13) disposées dans la zone de dépose (10) du dispositif élévateur et pivotant (8, 9), en particulier des tables élévatrices à parallélogramme, et les unités d'abaissement (13) sont abaissées, après l'empilage de chaque couche complète, de l'épaisseur de cette couche.

16. Procédé selon la revendication 14 ou 15, **caractérisé en ce que** les unités d'abaissement (13) conçues pour être mobiles sont déplacées manuellement ou automatiquement vers une ou plusieurs stations de récupération et une autre unité d'abaissement (13) vide est amenée à la place de l'unité d'abaissement (13) enlevée pour continuer l'empilage.
